# EUROPEAN PATENT APPLICATION

(11) **EP 1 939 490 A1**
(43) Date of publication of application: **02.07.2008**
(21) Application number: 06811813.2
(22) Date of filing: 16.10.2006
(51) Int. Cl.: F16H 25/22, B23G 1/02, F16H 25/24

(54) **BALL SCREW DEVICE**

(30) Priority: 19.10.2005 JP 2005305087
(71) Applicant: THK CO., LTD., Shinagawa-ku, Tokyo 141-8503 (JP)
(72) Inventor: SHIRAI, Takeshi c/o THK CO., LTD.,, Tokyo 141-8503 (JP)
(74) Representative: Grünecker, Kinkeldey, Stockmair & Schwanhäusser Anwaltssozietät
(86) International application number: PCT/JP2006/320542
(87) International publication number: WO 2007/046321

(57) **Abstract**

Provided is a ball screw device capable of downsizing a nut member (2), simplifying a circulation structure for balls (3), in which endless circulation of the balls (3) between the nut member (2) and a screw shaft (1) can be smoothly performed, and fluctuation of a rotation torque which occurs when the screw shaft (1) rotates relative to the nut member (2) can be suppressed as small as possible. A ball circulation groove (21) corresponding to all the periphery of the screw shaft (1) is formed on the inner peripheral surface of the nut member (2). The ball circulation groove (21) includes a load rolling groove (22) opposed to the ball rolling groove (10) in the screw shaft (1) and a ball returning groove (23) connecting one end and another end of the load rolling groove (22) to each other. The ball returning groove (23) is directly formed on the inner peripheral surface of the nut member (2) continuously with the load rolling groove (22) with no boundary, and a sectional shape of the ball returning groove (23), which is perpendicular to a ball advancing direction is formed in a Gothic arch shape so that each of the balls (3) is brought into contact with the ball returning groove (23) at two points.

## Description

### TECHNICAL FIELD

The present invention relates to a ball screw device having a structure in which a screw shaft and a nut member are threadingly engaged with each other through intermediation of balls, and a rotary motion and a linear motion can be converted to each other therebetween, and more particularly, to an improvement of a circulation structure for the balls between the screw shaft and the nut member.

### BACKGROUND ART

In general, a ball screw device includes a screw shaft having an outer peripheral surface formed with a helical ball rolling groove, a nut member formed in a cylindrical shape having a hollow portion through which a screw shaft is inserted and an inner peripheral surface formed with a helical load rolling groove opposed to the ball rolling groove of the screw shaft, and a plurality of balls which roll while being applied with a load in a load passage surrounded by the ball rolling groove of the screw shaft and the load rolling groove of the nut member. A rotary motion of the screw shaft can be converted into a linear motion of the nut member, or a rotation motion of the nut member can be converted into a linear motion of the screw shaft.

In order to enable continuous movement of the nut member along the screw shaft, both ends of the load passage have to be connected to each other to constitute an endless circulation passage of the balls, and the nut member is provided with a ball returning passage which connects the ends of the load passage to each other. As a structure of the ball returning passage, there are known various structures of a return tube system, an end cap system, or the like. As a system advantageous for downsizing the nut member, simplifying a ball circulation structure, and reducing production costs, there is known a deflector system.

In a ball screw device of the deflector system, a piece called a deflector having a groove-like ball returning passage (hereinafter, referred to as "ball returning groove") is embedded in an inner peripheral surface of the nut member, and an endless circulation passage is formed by the deflector. The deflector is mounted to the nut member such that the ball returning groove thereof crosses a screw thread of a screw shaft. A load passage for the balls, which is formed between the nut member and the screw shaft, is connected to the ball returning groove before making one round around the screw shaft. That is, the endless circulation passage for the balls, which makes one round around the screw shaft is constituted. The balls roll in the load passage while being applied with a load between the screw shaft and the nut member. After that, the balls enters the ball returning groove of the deflector and are released from the load. By the ball returning groove, the balls get over the screw thread of the screw shaft, and then enter the load passage again to be applied with a load.

In order to circulate the balls smoothly in the ball screw device of the deflector system, it is important that the load passage and the ball returning groove of the deflector be accurately connected to each other. However, the deflector is engaged with a passing hole formed so as to pass through the nut member or a recessed section formed on the inner peripheral surface of the nut member. Accordingly, due to an effect of processing accuracy of the deflector itself or processing accuracy of the nut member, it is difficult that the load passage and the ball returning groove be accurately connected to each other. Therefore, when each of the balls enters the ball returning groove from the load passage or enters the load passage from the ball returning groove, catching tends to occur, resulting in fluctuation in a rotation torque between the screw shaft and the nut member.

On the other hand, as one for solving the above-mentioned problem in the ball screw device of the deflector system, there is disclosed a ball screw device having a structure in which instead of forming the ball returning groove in the deflector which is separate from the nut member, the ball returning groove continuous with the load rolling groove is directly formed on the inner peripheral surface of the nut member by cutting processing or forging processing (JP 2003-307263 A).
Patent Document 1: JP 2003-307263 A

### DISCLOSURE OF THE INVENTION

### PROBLEM TO BE SOLVED BY THE INVENTION

In a case where the ball returning groove is directly processed in the inner peripheral surface of the nut member, the load passage and the ball returning groove are continuous with each other with no boundary. Accordingly, catching of the balls on the boundary can be prevented.

However, the conventional ball returning groove has a simple circular arc section perpendicular to an advancing direction of the balls. Further, in order to release the balls from a load, the ball returning groove is formed to be slightly larger than the load rolling groove in both a width direction and a depth direction thereof. As a result, disorder is caused in an alignment state of the balls in the ball returning groove, and the balls tend to clog in the ball returning groove. Accordingly, there is still a problem in that fluctuation tends to occur in the rotation torque between the screw shaft and the nut member.

### MEANS FOR SOLVING THE PROBLEM

The present invention is made in view of the above-mentioned problem. It is an object of the present invention to provide a ball screw device capable of downsizing a nut member and simplifying a circulation structure for balls, in which endless circulation of the balls between the nut member and a screw shaft can be smoothly performed and fluctuation of a rotation torque which occurs when the screw shaft and the nut member make relative rotation can be suppressed as small as possible.

A ball screw device according to the present invention for achieving the above-mentioned object includes: a screw shaft having an outer peripheral surface formed with a helical ball rolling groove; a nut member having an inner peripheral surface formed with at least one ball circulation groove corresponding to one round around the screw shaft; and a plurality of balls aligned between the ball rolling groove of the screw shaft and the ball circulation groove of the nut member, for threadingly engaging the screw shaft with the nut member. The ball circulation groove includes the load rolling groove opposed to a ball rolling groove of the screw shaft and a ball returning groove which connects one end and another end of the load rolling groove to each other. The ball returning groove is directly formed on the inner peripheral surface of the nut member so that the ball returning groove is continuous with the load rolling groove with no boundary, and the ball returning groove, which is perpendicular to a ball advancing direction thereof, has a section of a Gothic arch shape so that each of the plurality of balls is brought into contact with the ball returning groove at two points.

According to the present invention structured as described above, the load rolling groove and the ball returning groove constituting the ball circulation groove are directly formed on the inner peripheral surface of the nut member so as to be continuous with each other with no boundary. Accordingly, when the balls circulate in the ball circulation groove, the balls are not caught by the boundary between the load rolling groove and the ball returning groove, the balls can smoothly enter the ball returning groove from the load rolling groove and can enter the load rolling groove from the ball returning groove.

Further, the sectional shape of the ball returning groove, which is perpendicular to the ball advancing direction is formed in the Gothic arch shape so that each of the balls is brought into contact with the ball returning groove at two points. Accordingly, even when the balls roll in the ball returning groove in a non-load state, a locus of each of the balls in the ball returning groove is fixed by being guided by the groove of the Gothic arch shape, and meandering of the balls in the ball returning groove can be prevented. In particular, the balls rolling around the screw shaft are applied with a centrifugal force. Accordingly, even when the balls passing through the ball returning groove are in the non-load state, by the centrifugal force, the balls are pressed to an inside of the groove of the Gothic arch shape to roll along a predetermined locus. As a result, occurrence of a ball clogging phenomenon in the ball returning groove is prevented, thereby making it possible to allow the balls to roll in the ball returning groove more smoothly.

That is, according to the present invention, the rolling of the balls can be made smoother on an entire periphery of the ball circulation groove including the load rolling groove and the ball returning groove. Further, the fluctuation of the rotation torque which occurs when the screw shaft and the nut member make relative rotation can be suppressed as small as possible.

### BRIEF DESCRIPTION OF THE DRAWINGS

Fig. 1 is a side view illustrating an embodiment of a ball screw device to which the present invention is applied.
Fig. 2 is a perspective view illustrating a nut member of the ball screw device of Fig. 1.
Fig. 3 is a perspective view of the nut member, illustrating a state of a load rolling groove of the ball screw device according to the embodiment of the present invention.
Fig. 4 is a perspective view of the nut member, illustrating a state of the ball returning groove of the ball screw device according to the embodiment of the present invention.
Fig. 5 is a sectional view illustrating a ball rolling between a ball rolling groove of a screw shaft and the load rolling groove of the nut member.
Fig. 6 is a sectional view illustrating the ball rolling in the ball returning groove of the nut member.
Fig. 7 is a graph illustrating a center locus of each of the balls in a ball circulation groove of the nut member.
Fig. 8 is a schematic view illustrating an example of a method of cutting the ball circulation groove in the nut member.
Fig. 9 is a sectional view illustrating a relationship between a shape of a tip of an end mill and shapes of the load rolling groove and the ball returning groove.
Fig. 10 is a graph illustrating a center locus of balls in a conventional ball screw device.

### REFERENCE NUMERALS

1···screw shaft, 2···nut member, 3···ball, 10···ball rolling groove, 11···screw thread, 21···ball circulation groove, 22···load rolling groove, 23···ball returning groove

### BEST MODE FOR CARRYING OUT THE INVENTION

Hereinafter, a detailed description is made of a ball screw device according to the present invention with reference to the attached drawings.

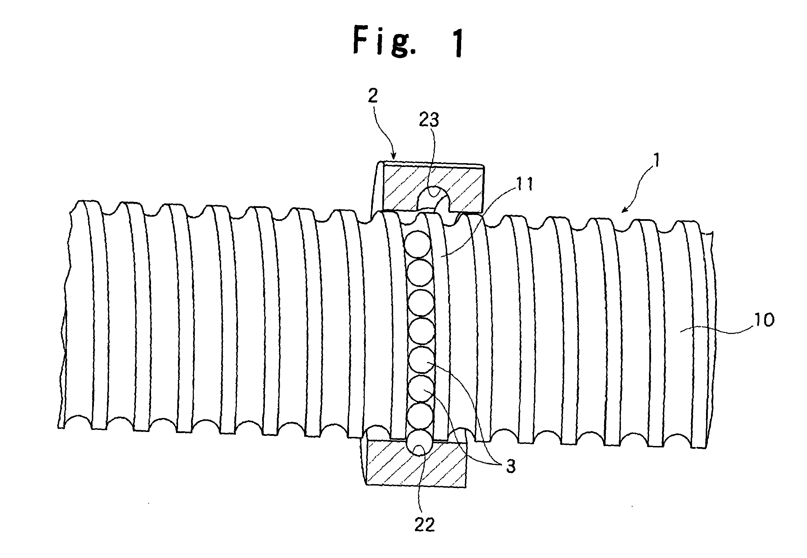

Fig. 1 illustrates an example of a ball screw device to which the present invention is applied. The ball screw device includes a screw shaft 1 having a helical ball rolling groove formed on an outer peripheral surface thereof and a nut member 2 threadingly engaged with the screw shaft 1 through intermediation of a plurality of balls 3. The nut member 2 rotates around a periphery of the screw shaft 1 in a helical manner. Note that, in Fig. 1, a part of the nut member 2 is notched, and the balls 3 illustrated therein are a part of the balls 3 existing between the nut member 2 and the screw shaft 1.

A helical ball rolling groove 10 is formed at a predetermined lead in an outer peripheral surface of the screw shaft 1. The balls 3 roll inside the ball rolling groove 10. In this case, the lead is a distance by which the ball rolling groove 10 advances in an axial direction of the screw shaft 1 by one rotation of the screw shaft 1. The ball rolling groove 10 is formed such that two curved surfaces cross each other at about 90 degrees. A sectional shape thereof perpendicular to a ball advancing direction has a Gothic arch shape. Accordingly, each of the balls 3 is brought into contact with the ball rolling groove 10 of the Gothic arch shape at two points and has a contact angle of about 45 degrees with respect to a load acting in the axis direction of the screw shaft 1. Further, between portions of the ball rolling groove 10 which are adjacent to each other on the outer peripheral surface of the screw shaft 1, there is formed a screw thread 11.

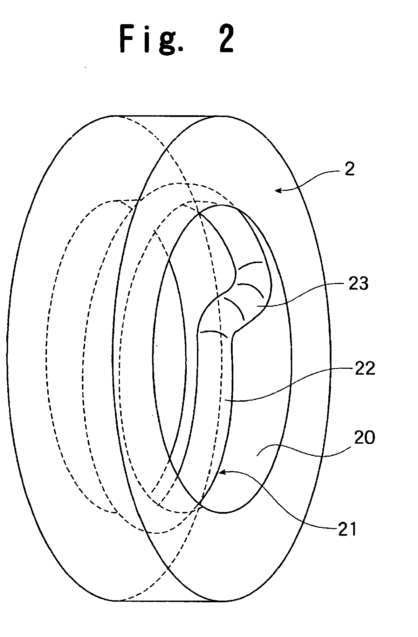

As illustrated in Fig. 2, the nut member 2 has a through hole 20 through which the screw shaft 1 is inserted and is formed in a substantially cylindrical shape. On an inner peripheral surface of the through hole 20, one ribbon of a ball circulation groove 21 is formed. The ball circulation groove 21 includes a load rolling groove 22 formed so as to be opposed to the ball rolling groove 10 of the screw shaft 1 and a ball returning groove 23 for connecting one end and another end of the load rolling groove 22. The load rolling groove 22 and the ball returning groove 23 are continuous with each other, thereby forming the ball circulation groove 21 corresponding to one round around the screw shaft.

The load rolling groove 22 and the ball returning groove 23 are directly formed on the nut member 2 by applying cutting to the inner peripheral surface of the nut member 2. The load rolling groove 22 and the ball returning groove 23 are continuous with each other with no boundary.

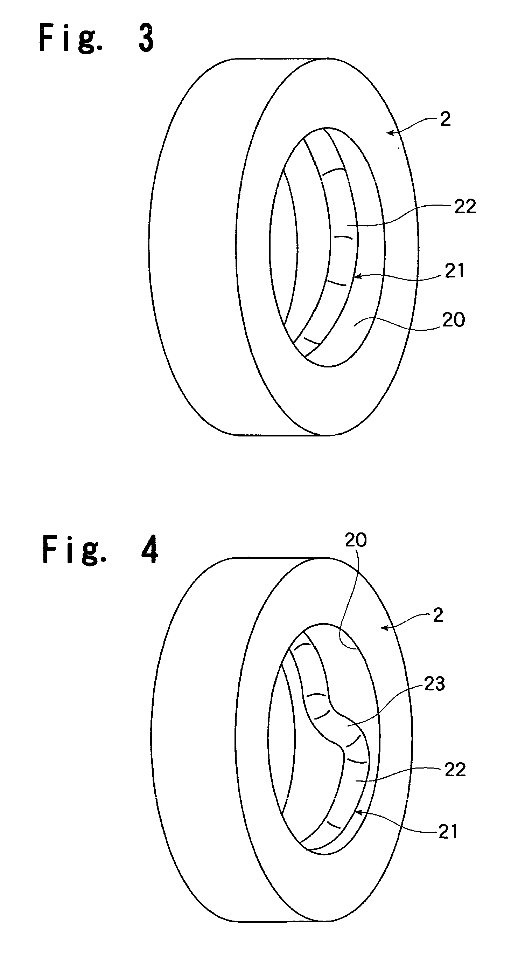

Fig. 3 is a perspective view illustrating a state where the load rolling groove 22 is formed on the nut member 2. Further, Fig. 4 is a perspective view illustrating a state where the ball returning groove 23 is formed on the nut member 2. The load rolling groove 22 constitutes a load passage of the balls 3, which is opposed to the ball rolling groove 10 of the screw shaft 1, and is formed so as to be slightly shorter than one round around the screw shaft 1. Further, the ball returning groove 23 is formed so as to cross the screw thread 11 of the screw shaft 1. In the load rolling groove 22, when the balls roll once around the screw shaft 1, that is, on the inner peripheral surface of the nut member 2, the balls advance a length of the lead in the axial direction of the nut member 2. Accordingly, the one end and the other end of the load rolling groove 22 are displaced from each other a distance slightly shorter than the length of the lead in the axial direction of the nut member 2. However, the ball returning groove 23 provided so as to cross the screw thread 11 connects the one end and the other end to each other, the ball circulation groove 21 of one round around the screw shaft 1 is formed.

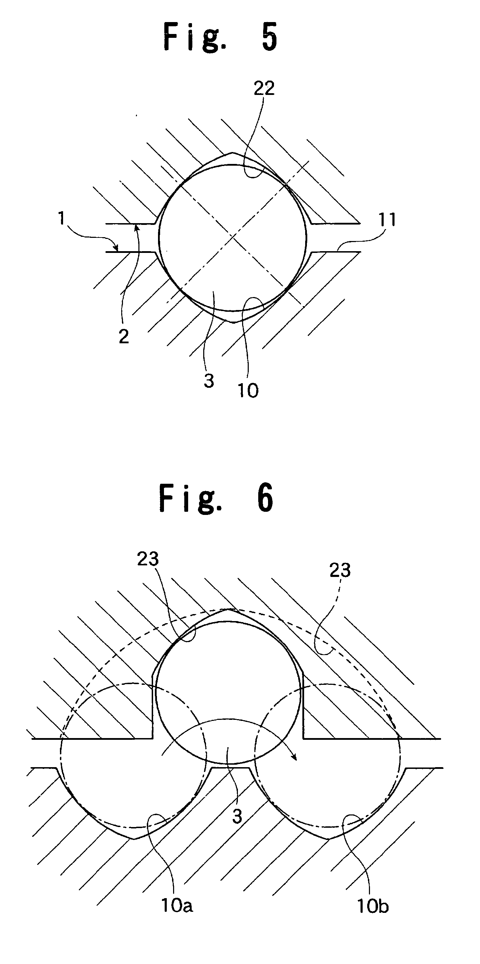

The ball circulation groove 21 is filled with the plurality of balls 3. When the nut member 2 rotates with respect to the screw shaft 1, or the screw shaft 1 rotates with respect to the nut member 2, along with the rotation, the balls 3 circulate in the ball circulation groove 21. The balls 3 roll between the load rolling groove 22 of the nut member 2 and the ball rolling groove 10 of the screw shaft 1 while being applied with a load. As illustrated in Fig. 5, a sectional shape of the load rolling groove 22 perpendicular to a ball advancing direction is the Gothic arch shape similarly to the ball rolling groove 10 of the screw shaft 1 side . Each of the balls 3 is brought into contact with the load rolling groove 23 at two points, and has a contact angle of about 45 degrees with respect to the load acting in the axis direction (right and left direction on a plane of Fig. 5) of the screw shaft 1. That is, the balls 3 are restrained to the ball rolling groove 10 and the load rolling groove 22 in a width direction thereof. Even in a case where a load in the axial direction acts between the nut member 2 and the screw shaft 1, the balls 3 roll in those grooves without swaying in the width direction of each of the grooves. Note that alternate long and short dash lines of Fig. 5 indicate directions of contact between the balls 3 and the load rolling groove 22 of the nut member 2 and contact between the balls 3 and the ball rolling groove 10 of the screw shaft 1.

On the other hand, Fig. 6 is a sectional view illustrating a state where the ball 3 rolls in the ball returning groove 23. The ball returning groove 23 is a portion corresponding to a conventional deflector, and becomes gradually deeper from a connection portion with respect to the load rolling groove 22 and is deepest at a position opposed to the screw thread 11 of the screw shaft 1. With this structure, when the ball 3 rolling in the load rolling groove 22 while being applied with a load enters the ball returning groove 23, the ball 3 is released from the load, resulting in a non-load state, and the ball 3 rises from a ball rolling groove 10a of the screw shaft 1, which is formed in the Gothic arch shape, while being guided by the ball returning groove 23. The ball 3 runs upon the screw thread 11 of the screw shaft 1 at the deepest portion of the ball returning groove 23, and is then returned to an adjacent ball rolling groove 10b while being directly guided by the ball returning groove 23, that is, the one-round-previous ball rolling groove 10b of the screw shaft 1. The ball 3 returned to the ball rolling groove 10b rolls between the load rolling groove 22 of the nut member 2 and the ball rolling groove 10b while being applied with a load. Note that, an arrow of Fig. 6 indicates a movement of the ball 3 in the ball returning groove 23.

Further, similarly to the load rolling groove 22, the sectional shape perpendicular to the advancing direction of the balls in the ball returning groove 23 is the Gothic arch shape. The depth of the ball returning groove 23 from the inner peripheral surface of the nut member 2 is the only difference from the load rolling groove 22. Accordingly, each of the balls 3 is brought into contact with the ball returning groove 23 at two points. The balls 3 roll in the ball returning groove 23 in the non-load state. Therefore, the balls 3 existing between the ball returning groove 23 and the screw shaft 1 are provided with play. However, a centrifugal force acts on the balls 3 circulating around the screw shaft 1. Accordingly, the balls 3 are pressed to a bottom portion of the ball returning groove 23 formed in the Gothic arch shape. As a result, each of the balls 3 is brought into contact with the ball returning groove 23 at two points. Accordingly, a movement locus of each of the balls 3 in the ball returning groove 23 matches with a central line in the width direction of the ball returning groove 23, and meandering of the balls 3 in the ball returning groove 23 is prevented.

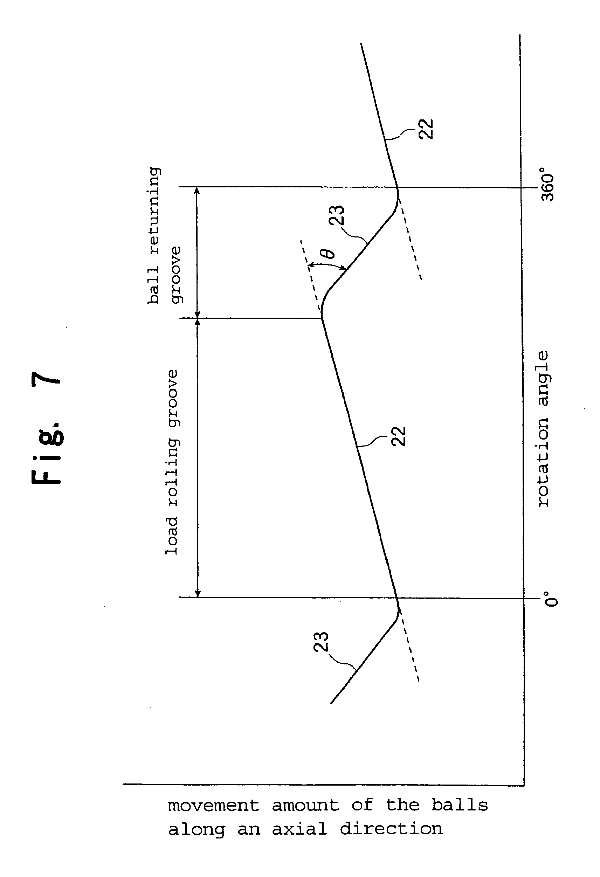

Fig. 7 is a graph illustrating a center locus of each of the balls 3 rolling in the load rolling groove 22 and the ball returning groove 23 with the inner peripheral surface of the through hole 20 being developed into a flat surface. A horizontal axis represents a rotation angle of the nut member 2, and a vertical axis represents a movement amount of the balls 3 along an axial direction of the screw shaft 1. An axial movement amount of the balls 3 rolling on the load rolling groove 22 is proportional to the rotation angle of the nut member 2. Accordingly, in this graph, the center locus of each of the balls 3 rolling in the load rolling groove 22 is a straight line. The center locus of each of the balls 3 rolling in the ball returning groove 23 is a curved line continuously connecting a pair of straight parallel lines to each other. As a result, one end and the other end of the load rolling groove 22 are connected by the ball returning groove, thereby constituting the ball circulation groove for one round around the screw shaft.

Next, a description is made of a method of processing the ball circulation groove 21 in the nut member 2.

First, the nut member 2 formed in a cylindrical shape is subjected to heat treatment for quenching or tempering. In this state, the inner peripheral surface of the nut member 2 is still a cylindrical surface, and the ball circulation groove 21 including the load rolling groove 22 and the ball returning groove 23 is not formed. Next, cutting processing is applied to the inner peripheral surface of the nut member 2 which has been subjected to the heat treatment, thereby forming the ball circulation groove 21. In the cutting processing, by using a single cutting tool, the load rolling groove 22 and the ball returning groove 23 are continuously processed in one cutting process. As a result, continuity between the load rolling groove 22 and the ball returning groove 23 can be ensured, and the ball circulating groove 21 including those grooves can be processed with high accuracy. Further, the cutting process is performed after the heat treatment process, so heat treatment strain does not affect on the ball circulation groove 21. Further, the cutting processing is applied to the nut member 2 after the heat treatment, thereby improving surface roughness of the load rolling groove 22 and the ball returning groove 23. Note that, polishing processing may be applied to the load rolling groove 22 after the cutting processing to further improve smoothness of the surface thereof.

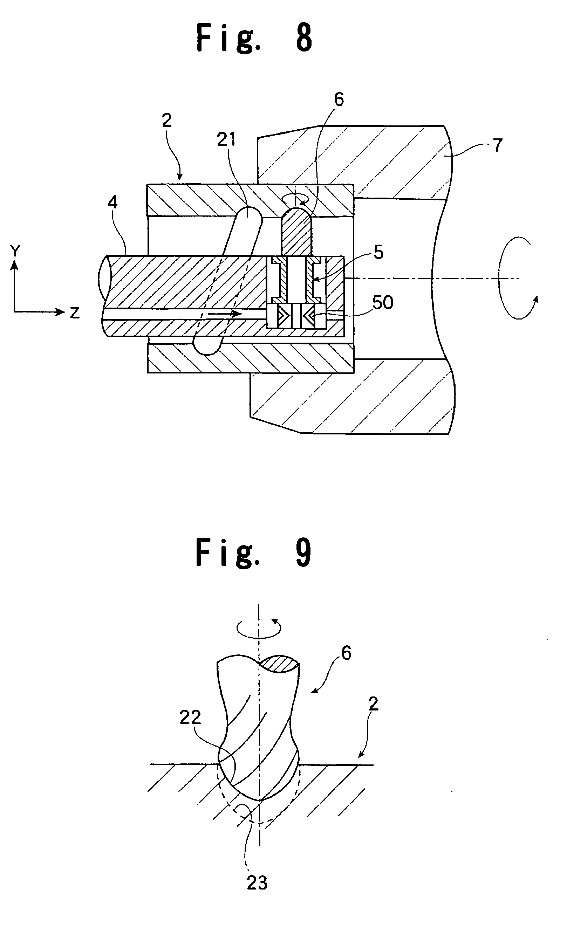

Fig. 8 illustrates an example of a cutting device for performing cutting processing of the ball circulation groove 21. The cutting device has a structure in which an end mill 6 is retained as a cutting tool on a spindle 5 provided to a tip of a quill shaft 4 and a rotary cutting primary motion is applied to the end mill 6, and a rotary main shaft of the spindle 5 is perpendicular to a longitudinal direction of the quill shaft 4. The nut member 2 is held by a chuck 7 with an axial direction of the nut member 2 being a Z axis, and the quill shaft 4 is inserted into the through hole 20 of the nut member 2 from the Z axis direction. In the cutting processing of the ball circulation groove 21, the nut member 2 is imparted with a rotary motion around the Z axis while being held by the chuck 7, and the quill shaft 4 is imparted with feed in the Z axis direction. The quill shaft 4 retaining the end mill 6 is fed in a Y axis direction which is a main axis direction of the spindle 5, thereby adjusting a depth of a cut formed by the end mill 6 in the inner peripheral surface of the nut member 2.

The spindle 5 supports a spindle main shaft, to which the end mill 6 is mounted, by a dynamic bearing and includes a turbine 50 mounted to the spindle main shaft. A pressurized fluid sent through the quill shaft 4 is sprayed to the turbine 50, thereby making it possible to impart high-speed rotation of 10000 rpm or more to the spindle main shaft. By using the spindle 5, high-speed rotation is imparted to the end mill 6, and at the same time, depending on the shape of the load rolling groove 22 and the ball returning groove 23, the rotation of the nut member 2 around the Z axis and the feeding of the end mill 6 in the Z axis direction and the Y axis direction are synchronized with each other, thereby making it possible to continuously cut the ball circulation groove 21 in the inner peripheral surface of the nut member 2. Further, by adjusting feeding of the end mill 6 in the Z axis direction and the Y axis direction, a depth and a lead of the load rolling groove 22 and a depth and a shape of the ball returning groove 23 can be freely changed.

Similarly to the load rolling groove 22 and the ball returning groove 23, a tip of the end mill 6 has a contour of the Gothic arch shape. As illustrated in Fig. 9, when the rotary cutting primary motion is imparted to the end mill 6 and the end mill 6 is allowed to cut into the inner peripheral surface of the nut member 2 , the load rolling groove 22 of the Gothic arch shape can be obtained. Further, by adjusting the feeding in the Y axis direction of the end mill, that is, the depth of the cut in the inner peripheral surface of the nut member 2, it is possible to also form the ball returning groove 23 of the Gothic arch shape in the same manner. That is, by changing a feeding amount of the end mill 6 in the Y axis direction, it is possible to continuously process the load rolling groove 22 and the ball returning grove 23 in the same cutting process by using a single cutting tool, to thereby easily form the closed ball circulation groove 21 for one round around the screw shaft 1.

In a ball screw device structured as described above, the load rolling groove 22 and the ball returning groove 23 are directly formed on the inner peripheral surface of the nut member 2 by the cutting processing. The load rolling groove 22 and the ball returning groove 23 are continuous with each other with no boundary. Accordingly, when the balls 3 circulate in the ball circulation groove 21 including those grooves, the balls 3 do not cause catching at connection portions between the load rolling groove 22 and the ball returning groove 23, thereby making it possible to realize smooth circulation of the balls 3.

Further, the section of the ball returning groove 23 is formed in the Gothic arch shape which is the same as the section of the load rolling groove 22. Each of the balls 3 rolls in the ball returning groove 23 while being brought into contact with the ball returning groove 23 at two points. Accordingly, a rolling locus of each of the balls 3 in the ball returning groove 23 is fixed in a line without swaying. As a result, it is possible to prevent a phenomenon in which the balls 3 clog in the ball returning groove 23. At this point as well, the circulation of the balls 3 can be made smoother.

As described above, sway of the balls applied with a load between the ball rolling groove 10 of the screw shaft 1 and the load rolling groove 22 of the nut member 2 is restrained in the width direction of the grooves by the grooves each having the Gothic arch section. Accordingly, the center locus of each of the balls 3 is fixed in one line in both the load rolling groove 22 and the ball returning groove 23, and, as illustrated in Fig. 7, the center locus of each of the balls 3 is a combination of a straight line and a curved line which are continuous with each other.

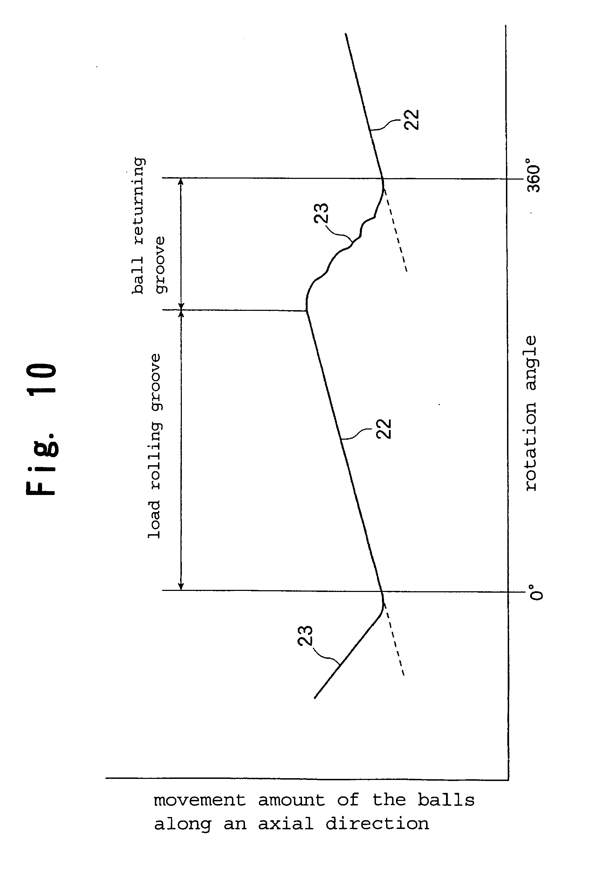

When, like in a case of a conventional deflector, the ball returning groove 23 is formed to be slightly larger than the load rolling groove in both a width direction and a depth direction thereof, the balls 3 sway in the ball returning groove 23. Accordingly, as shown in Fig. 10, the center locus of each of the balls 3 in the ball returning groove 23 becomes unstable and irregular. In this case, even when the load rolling groove 22 and the ball returning groove 23 are formed continuously with no boundary, resistance acts on the circulation of the balls 3 in the ball circulation groove 21, and a rotation torque required for rotating the nut member 2 with respect to the screw shaft 1 fluctuates.

In the ball screw device according to the present invention, as described above, the center locus of each of the balls 3 is fixed in one line in an entire region of the ball circulation groove 21 without swaying, and is smoothly continuous. Accordingly, the fluctuation of the rotation torque of the nut member 2 can be made as small as possible, and interconversion between a linear motion and a rotary motion can be smoothly performed.

Note that, in an example of the ball screw device described with reference to the drawings, only one ribbon of the ball circulation groove 21 is formed on the inner peripheral surface of the nut member 2. However, depending on a load required for the nut member 2, the number of ribbons of the ball circulation groove 21 may be increased.

## Claims

1. A ball screw device, comprising: a screw shaft (1) having an outer peripheral surface formed with a helical ball rolling groove (10); a nut member (2) having an inner peripheral surface formed with at least one ball circulation groove (21) corresponding to one round around the screw shaft (1), the ball circulation groove (21) including a load rolling groove (22) opposed to the ball rolling groove (10) and a ball returning groove (23) which connects one end and another end of the load rolling groove (22) to each other; and a plurality of balls (3) aligned between the ball rolling groove (10) of the screw shaft (1) and the ball circulation groove (21) of the nut member (2), for threadingly engaging the screw shaft (1) with the nut member (2),
wherein the ball returning groove (23) is directly formed on the inner peripheral surface of the nut member (2) so that the ball returning groove (23) is continuous with the load rolling groove (22) with no boundary; and the ball returning groove (23), which is perpendicular to a ball advancing direction thereof, has a section of a Gothic arch shape so that each of the plurality of balls (3) is brought into contact with the ball returning groove at two points.

2. The ball screw device according to claim 1, wherein: each of sectional shapes of the load rolling groove (22) and the ball returning groove (23), which is perpendicular to the ball advancing direction is the Gothic arch shape; and the load rolling groove (22) and the ball returning groove (23) are formed to be the same in groove width and different in groove depth.

3. A manufacturing method for the ball screw device according to claim 1, comprising cutting a ball circulation groove (21) continuously in an inner surface of a nut member (2) by using a single cutting tool (6) after the nut member (2) is subjected to heat treatment.

4. The manufacturing method for the ball screw device according to claim 3, wherein: a shape of a tip of the single cutting tool (6) is the Gothic arch shape; and the cutting of the ball circulation groove (21) is performed while imparting a rotary cutting primary motion to the single cutting tool (6).
